(19) Europäisches Patentamt
European Patent Office
Office européen des brevets

(11) EP 3 524 630 B1

(12) # EUROPEAN PATENT SPECIFICATION

(45) Date of publication and mention of the grant of the patent:
**23.06.2021 Bulletin 2021/25**

(51) Int Cl.:
***C08G 18/79*** *(2006.01)* ***C09D 175/06*** *(2006.01)*
***C08G 18/44*** *(2006.01)* ***C08L 69/00*** *(2006.01)*

(21) Application number: **19155717.2**

(22) Date of filing: **06.02.2019**

(54) **COATING COMPOSITION**

BESCHICHTUNGSZUSAMMENSETZUNG

COMPOSITION DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2018 JP 2018020920**
**28.01.2019 JP 2019012134**

(43) Date of publication of application:
**14.08.2019 Bulletin 2019/33**

(73) Proprietor: **Asahi Kasei Kabushiki Kaisha**
**Tokyo 1000006 (JP)**

(72) Inventors:
- **Ueno, Eizaburou**
**Tokyo, 100-0006 (JP)**
- **Shinomiya, Kie**
**Tokyo, 100-0006 (JP)**

(74) Representative: **Strehl Schübel-Hopf & Partner**
**Maximilianstrasse 54**
**80538 München (DE)**

(56) References cited:
**WO-A1-2017/138337 US-A1- 2016 369 034**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 524 630 B1

**Description**

BACKGROUND OF THE INVENTION

Field of the Invention

The present invention relates to a coating composition.

Description of the Related Art

Polycarbonate diols are known as a material excellent in hydrolysis resistance, light resistance, oxidative deterioration resistance, heat resistance and the like, and are used as a component for coating materials and coating compositions.

There are proposed, for example, a novel polycarbonate diol providing a polycarbonate-based polyurethane excellent in high hardness and abrasion resistance and excellent in hydrophilicity, and useful for applications to coating materials, coating agents, synthetic and artificial leathers, high functional elastomers and the like, and a polyurethane using the polycarbonate diol as a raw material (for example, see Japanese Patent Laid-Open No. 2012-72350). There is also proposed a self-repairing type formable coating composition which satisfies both self-repairability against flaws of a coating film and durability and is excellent in various characteristics essential as exterior coating films, such as water resistance, stain resistance and weather resistance, and which is made by combining an acryl resin, an allophanate group-containing polyisocyanate obtained by a reaction of an aliphatic organic diisocyanate with a polycarbonate diol, and an additive (for example, see Japanese Patent Laid-Open No. 2012-107101). There is further proposed a coating composition which contains an aliphatic oligocarbonate polyol, a hydroxy-functionalized polyacrylate polyol and an OH-reactive (poly)isocyanate crosslinking agent, and which can be used as an abrasive flaw-resistant top coat material (for example, see Japanese Patent Laid-Open No. 2007-16231) .

Technologies described in Japanese Patent Laid-Open Nos. 2012-72350, 2012-107101 and 2007-16231, however, cannot provide coating films having both high flaw restorability and stain resistance.

US 2016/0369034 A1 discloses a polyisocyanate composition obtained by reacting a polyisocyanate precursor and a polycarbonate diol. WO 2017/138337 A1 discloses a polycarbonate polyol derived from 2-methyl-1,3-propanediol, and a polyurethane obtained therefrom.

The present invention has been achieved in consideration of the above problem, and has an object to provide a coating composition capable of providing a coating film having both high flaw restorability and stain resistance.

SUMMARY OF THE INVENTION

That is, the constitution of the present invention is as follows.

[1] A coating composition comprising the following component $\alpha$, the following component $\beta$ and the following component $\gamma$;

component $\alpha$: a polycarbonate diol comprising repeating units represented by the following formulae (A) and (B) and a terminal hydroxyl group, wherein a molar ratio (the repeating unit represented by the formula (A)/the repeating unit represented by the formula (B)) between the repeating units represented by the formulae (A) and (B) is 1/99 to 100/0, and an average number of carbon atoms of the repeating units is 3.0 to 4.0;

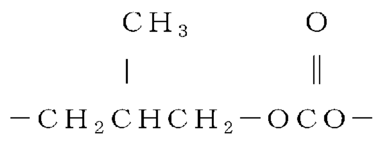

(A)

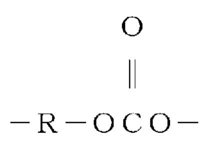

(B)

wherein R represents a divalent aliphatic hydrocarbon having 4 to 15 carbon atoms, excluding an alkylene group derived from 2-methyl-1,3-propanediol;

component β: a polyol other than the component α; and
component γ: an organic polyisocyanate,
wherein 50 mass% or more and 95 mass% or less of the component β is comprised based on a total mass of the component α and the component β.
[2] The coating composition according to [1], wherein the repeating unit represented by the formula (B) is a repeating unit represented by the following formula (C):

$$-(CH_2)_n-O\overset{\overset{\displaystyle O}{\|}}{C}O- \qquad (C)$$

wherein n represents an integer of 4 to 12.

The coating composition according to the present invention can provide a coating film having both high flaw restorability and stain resistance.

DETAILED DESCRIPTION OF THE PREFERRED EMBODIMENT

Hereinafter, an embodiment (hereinafter, referred to simply as "the present embodiment") to carry out the present invention will be described in detail. The following present embodiment is exemplifications of the present invention, and the present invention is not limited to the following contents. The present invention can be carried out with suitable changes and modifications within its gist.

<Coating composition>

A coating composition according to the present embodiment comprises the following component α, the following component β and the following component γ.
The component α is a specific polycarbonate diol.
The component β is a polyol other than the component α (hereinafter, referred to as "another polyol component" in some cases).
The component γ is an organic polyisocyanate.
The coating composition according to the present embodiment, since comprising the component α, the component β and the component γ having constitutions described below, can form a coating film excellent in high flaw restorability and stain resistance. These components will be described in detail hereinafter.

<Component α: a polycarbonate diol>

A polycarbonate diol (component α) contained in the coating composition according to the present embodiment comprises a polycarbonate diol comprising repeating units represented by the following formulae (A) and (B) and a terminal hydroxyl group.

$$-CH_2\overset{\overset{\displaystyle CH_3}{|}}{C}HCH_2-O\overset{\overset{\displaystyle O}{\|}}{C}O- \qquad (A)$$

$$-R-O\overset{\overset{\displaystyle O}{\|}}{C}O- \qquad (B)$$

wherein R represents a divalent aliphatic hydrocarbon having 4 to 12 carbon atoms, excluding an alkylene group derived from 2-methyl-1,3-propanediol.
The polycarbonate diol (component α) used in the present embodiment contains preferably 50 to 100 mass%

of a polycarbonate diol comprising repeating units represented by the above formulae (A) and (B) and a terminal hydroxyl group. When the content of the polycarbonate diol is 50 mass% or higher, there can be obtained a coating film excellent in stain resistance. The case where the content of the polycarbonate diol is 70 to 100 mass% is preferable because the stain resistance of the coating film becomes high; and the case of 90 to 100 mass% is more preferable.

The polycarbonate diol used in the present embodiment has the repeating unit represented by the above formula (A). Since the repeating unit has the number of carbon atoms between carbonate bonds of as small as 3 and has a structure having a side chain of a methylene group, the coating composition according to the present embodiment, by using a polycarbonate diol comprising this repeating unit, can provide a coating film having stain resistance and flaw restorability.

Further the polycarbonate diol used in the present embodiment can have the repeating unit represented by the above formula (B). The molar ratio (hereinafter, referred to as "repeating unit ratio" in some cases) between the repeating units represented by the above formulae (A) and (B) is the repeating unit represented by the formula (A) / the repeating unit represented by the formula (B), and is 1/99 to 100/0. When the coating composition according to the present embodiment has a repeating unit ratio in this range, there can be obtained a coating film having stain resistance and flaw restorability. The case where the repeating unit ratio is 20/80 to 100/0 is preferable because the stain resistance of an obtained coating film is improved; and the case of 30/70 to 100/0 is more preferable.

The case where the repeating unit represented by the above formula (B) is a repeating unit represented by the following formula (C), since a coating film having both flaw restorability and stain resistance can be provided, is preferable. In the following formula (C), the value of n of 4 to 6 is more preferable.

$$-(CH_2)_n-O\overset{\overset{\displaystyle O}{\|}}{C}O- \qquad (C)$$

wherein n represents an integer of 4 to 12.

In the polycarbonate diol used in the present embodiment, the average number of carbon atoms of the repeating units is 3.0 or larger and 4.0 or smaller. When the average number of carbon atoms is 3.0 or larger, a coating film having flaw restorability can be obtained; and when 4.0 or smaller, a coating film having stain resistance can be obtained. The case where the average number of carbon atoms is 3.2 or larger and 3.8 or smaller is more preferable for the same reason. Examples of a method of controlling the average number of carbon atoms in the above range include, but are not particularly limited to, a method of controlling it by a combination of raw material diols and their proportions. Specific examples thereof include a method of using 2-methyl-1,3-propanediol (a repeating unit represented by the formula (A)) as an essential raw material diol and selecting a raw material diol to become a repeating unit represented by the formula (B), and regulating their charging ratio to thereby control the average number of carbon atoms of the obtained polycarbonate diol.

Here, the average number of carbon atoms in the present embodiment is determined by a method indicated in Examples described later.

From the viewpoint of securing better handleability, the polycarbonate diol used in the present embodiment is preferably liquid at normal temperature in state of having been produced or after being allowed to stand in the surrounding atmosphere. "Liquid" used in the present embodiment means a state of being transparent and having fluidity. That is, the state means such a state that: when the polycarbonate diol is heated to 80°C, put in a transparent container and observed from the front of the container, the backward scene can be visually recognizable; and when the transparent container is tilted, fluidity is exhibited even slightly. Further "liquid at normal temperature" used in the present embodiment means being liquid at a temperature, for example, in the temperature range of 15°C or higher and 30°C or lower. The polycarbonate diol used in the present embodiment is preferably liquid at 10°C or higher, and preferably liquid further at 5°C or higher.

The number-average molecular weight of the polycarbonate diol used in the present embodiment is preferably 300 or higher and 3,000 or lower. When the number-average molecular weight is 300 or higher, the flaw restorability of an obtained coating film is likely to become better. When the number-average molecular weight is 3,000 or lower, the restrictions on the solid content concentration of coating materials and the like are likely to be lessened. From the similar viewpoint, the number-average molecular weight is preferably 450 or higher and 2,000 or lower and most preferably 700 or higher and 1,500 or lower.

A method for producing the polycarbonate diol used in the present embodiment is not particularly limited, and the polycarbonate diol can be produced by various methods described in Schnell, Polymer Reviews, Vol. 9, pp.9-20(1994).

The polycarbonate diol used in the present embodiment can use 2-methyl-1,3-propanediol as a diol raw material. In addition to this diol, there may be used, as raw materials, one or two or more diols of diols having no side chains such

as 1,4-butanediol, 1,5-pentanediol, 1,6-hexanediol, 1,7-heptanediol, 1,8-octanediol, 1,9-nonanediol and 1,10-dodecanediol, 1,11-undecanediol and 1,12-dodecanediol, diols having side chains such as 2-methyl-1,8-octanediol, 2-ethyl-1,6-hexanediol, 3-methyl-1,5-pentanediol, 2,4-dimethyl- 1,5-pentanediol, 2,4-diethyl-1,5-pentanediol, 2-butyl-2-ethyl-1,3-propanediol and 2,2-dimethyl-1,3-propanediol, and cyclic diols such as 1,4-cyclohexanedimethanol and 2-bis(4-hydroxycyclohexyl)-propane. The amounts of these diols are not limited as long as satisfying the average number of carbon atoms of the present application.

Further, compounds having 3 or more hydroxyl groups in one molecule thereof can also be used, for example, trimethylolethane, trimethylolpropane, hexanetriol and pentaerythritol only within the extent that the performance of the polycarbonate diol to be use in the present embodiment is not impaired. From the viewpoint of effective prevention of gelation by crosslinking during polymerization reaction of a polycarbonate when too much of the compounds having 3 or more hydroxyl groups in one molecule thereof are used, it is preferable that the amount of the compounds having 3 or more hydroxyl groups in one molecule thereof used be regulated. That is, even in the case of using the compounds having 3 or more hydroxyl groups in one molecule thereof, it is preferable that the compounds be 0.1 mol% or more and 5 mol% or less based on the total number of moles of 1,4-butanediol, 1,5-pentanediol and 1,6-hexanediol to be used. From the similar viewpoint, the proportion is more preferably 0.1 mol% or higher and 1 mol% or lower.

Examples of carbonates to become raw materials of the polycarbonate diol used in the present embodiment include, but are not particularly limited to, dialkyl carbonates such as dimethyl carbonate, diethyl carbonate, dipropyl carbonate and dibutyl carbonate, diaryl carbonates such as diphenyl carbonate, and alkylene carbonates such as ethylene carbonate, trimethylene carbonate, 1,2-propylene carbonate, 1,2-butylene carbonate, 1,3-butylene carbonate and 1,2-pentylene carbonate. One or two or more carbonates out of these carbonates can be used as raw materials. From the viewpoint of ease of availability and ease of setting of the polymerization reaction condition, it is preferable to use dimethyl carbonate, diethyl carbonate, diphenyl carbonate and ethylene carbonate.

In the production of the polycarbonate diol used in the present embodiment, a catalyst may be added or may not be added. In the case of adding a catalyst, one can optionally be selected from usual esterification catalysts. There is used, for example, a metal, a salt, an alkoxide or an organic compound of lithium, sodium, potassium, rubidium, cesium, magnesium, calcium, strontium, barium, zinc, aluminum, titanium, cobalt, germanium, tin, lead, antimony, arsenic, cerium or ytterbium. Especially preferable is a compound of titanium, tin, lead, magnesium or ytterbium. The amount of the catalyst used can be 0.00001 mass% or larger and 0.1 mass% or smaller based on the mass of an obtained polycarbonate diol.

The production method of the polycarbonate diol used in the present embodiment can be divided into two stages. For example, a diol and a carbonate are mixed in a molar ratio (diol : carbonate) of 20 : 1 to 1 : 10, and are subjected to the first-stage reaction under atmospheric or reduced pressure at 100°C or higher and 300°C or lower. In the case of using dimethyl carbonate as the carbonate, produced methanol is removed as a mixture with dimethyl carbonate to thereby obtain a low-molecular weight copolycarbonate diol. In the case of using diethyl carbonate as the carbonate, produced ethanol is removed as a mixture with diethyl carbonate to thereby obtain a low-molecular weight copolycarbonate diol. In the case of using ethylene carbonate as the carbonate, produced ethylene glycol is removed as a mixture with ethylene carbonate to thereby obtain a low-molecular weight copolycarbonate diol. Then, in the second-stage reaction, the resultant is heated under reduced pressure at 160°C or higher and 250°C or lower to cause the low-molecular weight copolycarbonate diol to be condensed while the unreacted diol and carbonate are removed, to thereby obtain a copolycarbonate diol having a predetermined molecular weight.

<Component β: a polyol component other than the component α>

The coating composition according to the present embodiment, in addition to the above polycarbonate diol (component α), further comprises another polyol component (component β) as a polyol being the base material.

The coating composition according to the present embodiment comprises 50 mass% or more and 95 mass% or less of component β based on the total mass of the component α and the component β. Incorporation of 50 mass% or more and 95 mass% or less of component β based on the total mass of the component α and the component β can provide a coating film having both high stain resistance and flaw restorability, and incorporation of 55 mass% or more and 90 mass% or less of component β is especially preferable.

Here, the masses of the component α and the component β used here are masses as polyols, and for example, in the case of using the polyols dissolved in a solvent, correspond to masses of their solid content.

Examples of another polyol (component β) include polyester polyol, polyether polyol, acryl polyol, polyolefin polyol fluorinated polyol, and are not limited thereto.

[Polyester polyol]

The polyester polyol is not particularly limited, and can be obtained, for example, by subjecting a dibasic acid

singly or a mixture of two or more thereof and a polyhydric alcohol singly or a mixture of two or more thereof to a condensation reaction.

The above dibasic acid include, but are not particularly limited to, carboxylic acids such as succinic acid, adipic acid, dimer acids, maleic anhydride, phthalic anhydride, isophthalic acid, terephthalic acid and 1,4-cyclohexanedicarboxylic acid.

Examples of the above polyhydric alcohol include, but are not particularly limited to, ethylene glycol, propylene glycol, diethylene glycol, 1,4-butanediol, neopentyl glycol, 1,6-hexanediol, trimethylpentanediol, cyclohexanediol, trimethylolpropane, glycerol, pentaerythritol, 2-methylolpropanediol and ethoxylated trimethylolpropane.

A specific production method of the polyester polyol is not particularly limited, but it can be produced, for example, by mixing and heating the above components at about 160°C to 220°C for a condensation reaction.

There can also be used, as the polyester polyol, but not particularly limited to, for example, such polycaprolactones as obtained by subjecting lactones such as ε-caprolactone to a ring-opening polymerization using a polyhydric alcohol.

The polyester polyol obtained by the above-mentioned production method can be modified by using an aromatic diisocyanate, an aliphatic diisocyanate, an alicyclic diisocyanate or a compound obtained therefrom. Among these, from the viewpoint of weather resistance, yellowing resistance of an obtained coating film, it is preferable that the polyester polyol be modified by using an aliphatic diisocyanate, an alicyclic diisocyanate or a compound obtained therefrom.

In the case where the coating composition according to the present embodiment contains a solvent having a high water content, by making part of the carboxylic acid derived from the dibasic acid and the like in the polyester polyol to remain and neutralizing the carboxylic acid with a base such as an amine or ammonia, the polyester polyol can be turned to a water-soluble or water-dispersible resin.

[Polyether polyol]

The polyether polyol is not particularly limited, and can be obtained, for example, by one method of the following (1) to (3).

(1) A method in which an alkylene oxide singly or a mixture of alkylene oxides is random or block added to a polyhydroxy compound singly or a mixture of polyhydroxy compounds by using a catalyst to thereby obtain a polyether polyol.
Examples of the catalyst include, but are not particularly limited to, hydroxides (lithium, sodium, potassium and the like), strong basic catalysts (alcoholates, alkylamines and the like) and composite metal cyan compound complexes (metal porphyrins, zinc hexacyanocobaltate complex and the like).
Examples of the alkylene oxide include, but are not particularly limited to, ethylene oxide, propylene oxide, butylene oxide, cyclohexene oxide and styrene oxide.
(2) A method in which a polyamine compound is caused to react with an alkylene oxide to thereby obtain a polyether polyol.
Examples of the polyamine compound include, but are not particularly limited to, ethylene diamines.
The alkylene oxide is not particularly limited, but includes the same examples as exemplified in (1).
(3) A method in which a polyether polyol obtained in (1) or (2) is used as a medium and acrylamide or the like is polymerized to thereby obtain a so-called polymer polyol.

Examples of the above polyhydroxy compound include, but are not particularly limited to, the following (i) to (v) .

(i) diglycerol, ditrimethylolpropane, pentaerythritol, dipentaerythritol and the like
(ii) sugar alcohol compounds such as erythritol, D-threitol, L-arabinitol, ribitol, xylitol, sorbitol, mannitol, galactytol and rhamnitol
(iii) monosaccharides such as arabinose, ribose, xylose, glucose, mannose, galactose, fructose, sorbose, rhamnose, fucose and ribodesose
(iv) disaccharides such as trehalose, cane sugar, maltose, cellobiose, gentiobiose, lactose and melibiose
(v) trisaccharides such as raffinose, gentianose and melezitose
(vi) tetrasaccharides such as stachyose

[Acryl polyol]

The acryl polyol is not particularly limited, and can be obtained, for example, by polymerizing only a polymerizable monomer having one or more active hydrogen in one molecule thereof, or by copolymerizing a polymerizable monomer having one or more active hydrogen in one molecule thereof, as required, with another monomer copolymerizable with

the polymerizable monomer.

Examples of the polymerizable monomer having one or more active hydrogen in one molecule thereof include, but are not particularly limited to, the following (i) to (vi). These may be used singly or in combinations of two or more.

(i) an acrylate ester having active hydrogen, such as 2-hydroxyethyl acrylate, 2-hydroxypropyl acrylate or 2-hydroxybutyl acrylate
(ii) a methacrylate ester having active hydrogen, such as 2-hydroxyethyl methacrylate, 2-hydroxypropyl methacrylate, 2-hydroxybutyl methacrylate, 3-hydroxypropyl methacrylate or 4-hydroxybutyl methacrylate
(iii) a (meth)acrylate ester having polyvalent active hydrogen, such as a (meth)acrylate monoester of a triol such as glycerol or trimethylolpropane
(iv) a monoether of a polyether polyol (for example, polyethylene glycol, polypropylene glycol or polybutylene glycol) with the (meth)acrylate ester having active hydrogen
(v) an adduct of glycidyl (meth)acrylate with a monobasic acid (for example, acetic acid, propionic acid or p-tert-butylbenzoic acid)
(vi) an adduct obtained by a ring-opening reaction of the active hydrogen of the (meth)acrylate ester having active hydrogen with a lactone (for example, $\varepsilon$-caprolactone or $\gamma$-valerolactone)

Examples of another monomer copolymerizable with the polymerizable monomer include, but are not particularly limited to, the following (i) to (iv) . These may be used singly or in combinations of two or more.

(i) a (meth)acrylate ester such as methyl acrylate, ethyl acrylate, isopropyl acrylate, n-butyl acrylate, 2-ethylhexyl acrylate, methyl methacrylate, ethyl methacrylate, isopropyl methacrylate, n-butyl methacrylate, isobutyl methacrylate, n-hexyl methacrylate, cyclohexyl methacrylate, lauryl methacrylate or glycidyl methacrylate
(ii) an unsaturated carboxylic acid such as acrylic acid, methacrylic acid, maleic acid or itaconic acid, or an unsaturated amide such as acrylamide, N-methylolacrylamide or diacetoneacrylamide
(iii) a vinyl monomer having a hydrolyzable silyl group, such as vinyltrimethoxysilane, vinylmethyldimethoxysilane or $\gamma$-(meth)acryloyloxy propyltrimethoxysilane
(iv) another polymerizable monomer, such as styrene, vinyltoluene, vinyl acetate, acrylonitrile or dibutyl fumarate

A specific production method of the acryl polyol is not particularly limited, but the acryl polyol can be obtained, for example, by subjecting the above monomer to solution polymerization in the presence of a well-known radical polymerization initiator such as a peroxide or an azo compound, and as required, diluting the resultant with an organic solvent or the like.

In the case where the coating composition according to the present embodiment contains a solvent having a high water content, the acryl polyol can be produced by a well-known method such as a method involving subjecting the above monomer to solution polymerization and converting the resultant to a water layer or an emulsion polymerization. In this case, water dissolvability or water dispersibility can be imparted to the acryl polyol by neutralizing an acid moiety of a carboxylic acid-containing monomer such as acrylic acid or a methacrylic acid or a sulfonic acid-containing monomer with an amine or ammonia.

[Polyolefin polyol]

Examples of the polyolefin polyol include, but are not particularly limited to, polybutadienes having two or more hydroxyl groups, hydrogenated polybutadienes having two or more hydroxyl groups, polyisoprenes having two or more hydroxyl groups, and hydrogenated polyisoprenes having two or more hydroxyl groups.

It is preferable that the number of hydroxyl groups (hereinafter, "average number of hydroxyl groups" in some cases) one molecule of the polyolefin polyol statistically has be 2 or more.

[Fluorinated polyol]

In the present description, the "fluorinated polyol" means a polyol containing fluorine in the molecule. Specific examples thereof include, but are not particularly limited to, copolymers of a fluoroolefin, a cyclo vinyl ether, a hydroxyalkyl vinyl ether, a vinyl monocarboxylate or the like, disclosed in Japanese Patent Laid-Open No. 57-34107 (reference literature 1), Japanese Patent Laid-Open No. 61-275311 (reference literature 2) and the like.

As another polyol component (component $\beta$), the acryl polyol, the polyolefin polyol or the fluorinated polyol is preferable because being able to provide a coating film having stain resistance; and the acryl polyol is more preferable.

<Component $\gamma$: an organic polyisocyanate>

An organic polyisocyanate contained in the coating composition according to the present embodiment is not particularly limited as long as being one functioning as a hardener of the coating composition, and there is used one having two or more isocyanate groups on the terminals.
Examples of such an organic polyisocyanate include, but are not particularly limited to, chain aliphatic diisocyanates, alicyclic diisocyanates, aromatic diisocyanates and isocyanate compounds having three or more isocyanate groups, and isocyanurated modified products and biuretized modified products of these isocyanate compounds.
Examples of the chain aliphatic diisocyanate include, but are not particularly limited to, hexamethylene diisocyanate and trimethylhexamethylene diisocyanate.
Examples of the alicyclic diisocyanate include, but are not particularly limited to, isophorone diisocyanate.
Examples of the aromatic diisocyanate include, but are not particularly limited to, tolylene diisocyanate, 4,4'-diphenylmethane diisocyanate, xylylene diisocyanate and naphthylene diisocyanate.
Examples of the isocyanate compound having three or more isocyanate groups include, but are not particularly limited to, triphenylmethane-4,4'-4''-triisocyanate, 1,3,5-triisocyanatobenzene, 2,4,6-triisocyanatotoluene, and 4,4'-dimethyldiphenylmethane-2,2',5,5'-tetraisocyanate.
The organic polyisocyanate to be used may be commercially available ones, or may be synthesized by a well-known method.
Examples of the commercially available products of the organic polyisocyanate include, but are not particularly limited to, a series of "Duranate (trade name)", manufactured by Asahi Kasei Corp., such as 24A-100, 22A-75P, TPA-100, TKA-100, P301-75E, D101, D201, 21S-75E, MFA-75B, MHG-80B, TUL-100, TLA-100, TSA-100, TSS-100, TSE-100, E402-80B, E405-80B, AE700-100, A201H, 17B-60P, TPA-B 80E, MF-B 60B, MF-K 60B, SBB-70P, SBN-70D, E402-B80B, WB40-100, WT30-100, WT31-100, WB40-80D, WT20-100, WL70-100, WE50-100 and WM44-L70G.
In the coating composition according to the present embodiment, the content of the organic polyisocyanate (component $\gamma$) may suitably be regulated according to the molar amount of hydroxyl groups of a polyol being the base material. Specifically, the molar ratio (NCO/OH) of the isocyanate group of the organic polyisocyanate (component $\gamma$) to the hydroxyl group of the polyol can be made, for example, to be 0.2 or higher and 5.0 or lower, for example, to be 0.4 or higher and 3.0 or lower, and for example, to be 0.5 or higher and 2.0 or lower. When the NCO/OH is the above lower limit value or higher, a tougher coating film is likely to be provided. On the other hand, when the NCO/OH is the above upper limit value or lower, the smoothness of a coating film is likely to be more improved.

<Organic solvent>

For the coating composition according to the present embodiment, an organic solvent can be used. The organic solvent suffices if functioning as a solvent of the coating composition.
Specific examples of the organic solvent include, but are not particularly limited to, amide-based solvents, sulfoxide-based solvents, ketone-based solvents, ether-based solvents, ester-based solvents, carbonate ester solvents and aromatic hydrocarbon-based solvents.
Examples of the amide-based solvent include, but are not particularly limited to, dimethylformamide, diethylformamide, dimethylacetamide and N-methylpyrrolidone.
Examples of the sulfoxide-based solvent include, but are not particularly limited to, dimethyl sulfoxide.
Examples of the ketone-based solvent include, but are not particularly limited to, methyl ethyl ketone, methyl isobutyl ketone, diisobutyl ketone and cyclohexanone.
Examples of the ether-based solvent include, but are not particularly limited to, tetrahydrofuran and dioxane.
Examples of the ester-based solvent include, but are not particularly limited to, methyl acetate, ethyl acetate, butyl acetate, isobutyl acetate, propylene glycol 1-monomethyl ether 2-acetate.
Examples of the carbonate ester solvent include, but are not particularly limited to, dimethyl carbonate, diethyl carbonate and propylene carbonate.
Examples of the aromatic hydrocarbon-based solvent include, but are not particularly limited to, toluene and xylene.
These organic solvents may be used singly or as a mixed solvent of two or more.
Among these, as an organic solvent contained in the coating composition according to the present embodiment, preferable is one or more selected from the group consisting of dimethylformamide, dimethylacetamide, N-methylpyrrolidone, methyl ethyl ketone, methyl isobutyl ketone, diisobutyl ketone, methyl acetate, ethyl acetate, butyl acetate, isobutyl acetate, propylene glycol 1-monomethyl ether 2-acetate, toluene and xylene.
The content of the organic solvent in the coating composition according to the present embodiment can be made, based on the total mass of the coating composition, for example, to be 10 mass% or higher and 90 mass% or lower, for example, to be 15 mass% or higher and 70 mass% or lower, and for example, to be 20 mass% or higher and

50 mass% or lower.

<Other additives>

The coating composition according to the present embodiment, in addition to the above component $\alpha$, the above component $\beta$ and the above component $\gamma$, according to various types of applications, may comprise other additives such as hardening accelerators (catalysts), fillers, flame retardants, dyes, organic or inorganic pigments, mold release agents, fluidity regulators, plasticizers, antioxidants, ultraviolet absorbers, light stabilizers, thermal stabilizers, defoaming agents, leveling agents and colorants.

Examples of the hardening accelerator include, but are not particularly limited to, usually used ones such as monoamines, diamines, triamines, cyclic amines, alcohol amines, ether amines and metal catalysts.

Examples of the monoamine particularlyinclude, but are not particularly limited to, triethylamine and N,N-dimethylcyclohexylamine.

Examples of the diamine include, but are not particularly limited to, tetramethylethylenediamine.

Examples of the alcohol amine include, but are not particularly limited to, dimethylethanolamine.

Examples of the metal catalyst include, but are not particularly limited to, potassium acetate, potassium 2-ethylhexanoate, calcium acetate, lead octylate, dibutyltin dilaurate, tin octylate, bismuth neodecanoate, bismuth oxycarbonate, bismuth 2-ethylhexanoate, zinc octylate, zinc neodecanoate, phosphine and phosphorine.

Examples of the filler, the dyes, the organic or inorganic pigments and the colorants include, but are not particularly limited to, usually used ones such as woven fabrics, glass fibers, carbon fibers, polyamide fibers, mica, kaolin, bentonite, metal powders, azo pigments, carbon black, clay, silica, talc, gypsum, alumina white and barium carbonate.

Examples of the flame retardant include, but are not particularly limited to, inorganic flame retardants, aromatic bromine compounds and phosphorus-based flame retardants.

Examples of the inorganic flame retardant include, but are not particularly limited to, antimony trioxide, aluminum hydroxide, magnesium hydroxide and zinc borate.

Examples of the aromatic bromine compound include, but are not particularly limited to, hexabromobenzene, decabromodiphenylethane, 4,4-dibromobiphenyl and ethylenebistetrabromophthalimide.

Examples of the phosphorus-based flame retardant include, but are not particularly limited to, resorcinol bis(diphenyl phosphate) and resorcinol bis(dixylenyl phosphate).

The mold release agents, the fluidity regulators and the leveling agents are not particularly limited, and, there are used, for example, silicones, Aerosil, waxes, stearate salts and polysiloxanes such as BYK-331 (manufactured by BYK-Chemie GmbH).

Examples of the plasticizer include, but are not particularly limited to, phthalate esters, phosphate esters, fatty acid esters, pyromellitate esters, epoxy-based plasticizers, polyether-based plasticizers, liquid rubbers and non-aromatic paraffin oils.

The antioxidants, the ultraviolet absorbers, the light stabilizers and the thermal stabilizers are not particularly limited, and there can be used, for example, phosphorus compounds, phenolic derivatives, compounds containing sulfur, and tin-based compounds. These may be used singly or in combinations of two or more.

Examples of the phosphorus compound include, but are not particularly limited to, aliphatic group- and aromatic group-substituted aromatic esters of phosphoric acid and phosphorous acid, and hypophosphorous acid derivatives. Specific examples of the phosphorus compound include, but are not particularly limited to, phenylphosphonic acid, phenylphosphinic acid, diphenylphosphonic acid, polyphosphonates, dialkyl pentaerythritol diphosphites and dialkyl bisphenol A diphosphites.

Examples of the phenolic derivative include, but are not particularly limited to, hindered phenol compounds.

Examples of the compound containing sulfur include, but are not particularly limited to, thioether-based compounds, dithio acid salt-based compounds, mercaptobenzimidazole-based compounds, thiocarbanilide-based compounds and thiodipropionate esters.

Examples of the tin-based compound include, but are not particularly limited to, tin maleate and dibutyltin monoxide.

Examples of the defoaming agent include, but are not particularly limited to, silicone oils, modified silicone oils, nonionic surfactants and mineral oils.

Examples of the silicone oil include, but are not particularly limited to, high-molecular weight polydimethylsiloxanes.

Examples of the modified silicone oil include, but are not particularly limited to, amino group-introduced silicone oils.

Examples of the nonionic surfactant include, but are not particularly limited to, polyoxyethylene alkyl ethers.

It is preferable that the coating composition according to the present embodiment contain, as the other additives

(component $\delta$), at least, the antioxidant, the ultraviolet absorber, the light stabilizer and the thermal stabilizer.

Further, the coating composition according to the present embodiment may contain water content derived from solvents or raw materials. It is preferable that the content of water contained in the coating composition according to the present embodiment be 10 mass% or lower.

<Method for producing the coating composition>

A method for producing the coating composition according to the present embodiment is not particularly limited as long as being a method of mixing the above component $\alpha$, the above component $\beta$ and the above component $\gamma$, and as required, an organic solvent and other additives. Specific examples of the method for producing the coating composition according to the present embodiment include a method involving stirring using a stirrer at a rotation frequency of 50 rpm or higher and 1,000 rpm or lower for 5 min or longer and 60 min or shorter, and thereafter carrying out a defoaming operation using a vacuum defoaming device.

<Coating method>

A method for coating the coating composition according to the present embodiment is not particularly limited, but there is used, for example, a method involving mixing each component right before coating operation and thereafter coating on a substrate material with a sprayer, a roll, a brush or the like. It is also possible to use a method in which components other than the component $\gamma$, which is a hardener, are mixed in advance, and the component $\gamma$ is added to the mixture and homogeneously mixed right before the coating operation and then the coating operation is carried out.

<Use>

The coating composition according to the present embodiment can suitably be utilized in the broad fields of coating on cars, buses, railway vehicles, construction machines, agricultural machines, floors, walls and roofs of buildings, metal products, mortar and concrete products, woodwork products, plastic products, ceramic building materials such as calcium silicate boards and gypsum boards, and the like.

Examples

Hereinafter, the present embodiment will be described more specifically by way of specific Examples and Comparative Examples, but the present embodiment, as long as not departing from its gist, is not any more limited to these Examples and Comparative Examples. In the present Examples, unless otherwise specified, "parts" and "%" are in terms of mass.

Physical properties and evaluations in Examples and Comparative Examples described later were measured and evaluated by the following methods.

1. Determination of the compositions of polycarbonate diols

1 g of a polycarbonate diol obtained in each Synthesis Example described later was weighed; and the 1 g of the polycarbonate diol, 30 g of ethanol and 4 g of potassium hydroxide were charged in a 100-mL recovery flask to thereby prepare a sample. The prepared sample was heated in an oil bath at 100°C for 1 hour. The sample, after being cooled to room temperature, was added with one or two drops of phenolphthalein as an indicator, and neutralized with hydrochloric acid. The sample was cooled in a refrigerator for 3 hours, and after precipitated salts were removed by filtration, was subjected to gas chromatography (GC) analysis. Here, the GC analysis was carried out by using a gas chromatography GC14B (manufactured by Shimadzu Corp.) equipped with a DB-WAX (J & W Scientific Inc.) of 30 m and 0.25 $\mu$m in membrane thickness as a column, by using diethylene glycol diethyl ester as an internal standard, and by using a flame ionization detector (FID) as a detector. The temperature-rise profile of the column was made such that the column was held at 60°C for 5 min and thereafter heated at 10°C/min up to 250°C.

The identification of each peak in the GC analysis was carried out by using the following GC-MS instrument. The GC instrument used a 6890 (manufactured by Hewlett-Packard Development Co.) equipped with a DB-WAX (J & W Scientific Inc.) as a column. In the GC instrument, the temperature was raised at a temperature-rise rate of 10°C/min from an initial temperature of 40°C up to 220°C. The MS instrument used was an Auto-mass SUN (JEOL Ltd.). In the MS instrument, the measurement was carried out at an ionization voltage of 70 eV, in a scanning range of m/z = 10 to 500 and at a photomultiplier gain of 450 V.

The ratio of repeating units was determined based on the molar ratio acquired by the above method of 2-methyl-1,3-propanediol and other aliphatic diols having 4 to 15 carbon atoms.

2. Determination of the average numbers of carbon atoms of the polycarbonate diols

The average numbers of carbon atoms of the polycarbonate diols were calculated from analysis values of diols acquired by the determination of the compositions of the polycarbonate diols by using the following expression (1).

$$\Sigma(\text{the number of carbon atoms between OH groups} \times \text{a molar fraction of the diol}) \cdots (1)$$

For example, as a result of a composition analysis, in the case where as diols, 2-methyl-1,3-propanediol (30 mol%) and 1,6-hexanediol (70 mol%) were detected, the average number of carbon atoms became $3 \times 0.3 + 6 \times 0.7 = 5.1$.

3. Determination of molecular weights of the polycarbonate diols

The number-average molecular weights of the polycarbonate diols were determined by determining hydroxyl values by the "neutralization titration method (JIS K0070-1992)", which involves titration with an ethanol solution of potassium hydroxide by using acetic anhydride and pyridine, and calculating the number-average molecular weights by using the following expression (2)

$$\text{Number-average molecular weight} = 2/(\text{an OH value} \times 10^{-3}/56.1) \cdots (2)$$

4. Check of properties of the polycarbonate diols

The polycarbonate diols heated to 80°C were each charged in a 50-mL transparent glass-made sample bottle, and then cooled to room temperature. The presence states of the polycarbonate diols after being cooled were visually observed. In the case where a polycarbonate diol was transparent and even slightly had fluidity, the polycarbonate diol was represented as liquid; and in the case of no fluidity, as solid. The fluidity was evaluated by tilting the sample bottle by about 45° and observing the surface of the polycarbonate diol for about 1 minute; and in the case where the surface moved, the polycarbonate diol was determined as fluidity being present. Then, the transparency was evaluated according to whether or not the backward scene was visually recognizable through the sample bottle when the sample bottle was observed from the front; and the state that the backward scene was visually recognizable through the entire portion of the sample was determined as transparent.

5. Determination of the abrasive flaw resistance of coating films

First, removable paper-made re-peelable adhesive tapes in numbers necessary as spacers were pasted on both ends of a glass plate (JIS R3202, 2 mm $\times$ 100 mm $\times$ 150 mm). Then, each coating composition obtained in Examples and Comparative Examples described later was dropped on the upper portion of the plate, and coated by using a glass bar (diameter: 8 mm) so that the dry film thickness became 45 to 55 $\mu$m. Then, the resultant was baked and dried at 80°C for 1 hour, and further aged in an atmosphere of 23°C and 50%RH for 7 days to thereby obtain a coating film.

A brass brush (standard type, three lines, manufactured by As One Co., Ltd.) was installed by using a coating film on a Rubbing Tester (manufactured by Taiheirika Kogyo K. K.); and abrasive flaws were scored on the coating film by 20 times reciprocating the brush at a load of 745 g. There were measured the glosses (X1, X2, X3) of the portion where the abrasive flaws had been scored in the abrasive flaw resistance test right after the scoring, after the scored coating film was allowed to stand in an atmosphere of 23°C and 50%RH for 1 hour, and after the standing for 1 day in the atmosphere, respectively, by using a variable-angle gloss meter (UGV-6P, manufactured by Suga Test Instruments Co., Ltd.) set at a light receiving angle of 60° and an incident angle of 60°.
The gloss retention of each time was calculated by using the following expression (3).

$$\text{Gloss retention (\%)} = (Xn/X0) \times 100 \cdots (3)$$

X0: a gloss of the same portion before the abrasive flaw resistance test
Xn: a gloss of the portion where flaws had been scored in the abrasive flaw resistance test (X1, X2, X3)

Then, the flaw restorability was evaluated from the acquired gloss retention according to the following criteria. Here, the cases where a coating film could not be formed in the evaluation for transparency (room temperature) and a coating film had a haze value of 1.0 or higher were determined as nonevaluable because the reproducible evaluation was difficult.

(Evaluation criteria)

◎: gloss retention of 95% or higher
○: gloss retention of 90% or higher and lower than 95%
Δ : gloss retention of 75% or higher and lower than 90%
× : gloss retention of lower than 75%, or nonevaluable

6. Determination of the stain resistance of the coating films

An aluminum plate (JIS H4000, 2 mm × 100 mm × 150 mm) was coated in white by using Mytech GII300 White as a base material and Mytech GII Hardener as a hardener so that the dry film thickness became 20 to 30 μm to thereby obtain a white plate. Each coating composition obtained in Examples and Comparative Examples described later was applied on the obtained white plate to thereby obtain a coating film. L*a*b (E0) of the coating film was measured by using a color meter (SM-P45, manufactured by Suga Test Instruments Co., Ltd.). Lines were drawn on the coating film by using superthick marking inks of black (MGD-T1) and blue (MGD-T3), manufactured by Teranishi Chemical Industry Co., Ltd. After 10 min, acetone (first grade reagent) put in a poly washing bottle was poured onto the coating film to wash away the inks. Thereafter, the coating film was dried at room temperature for 15 min; and L*a*b (E) of the coating film (portion where the inks had been applied) was measured by using the color meter. The color difference (ΔE) was determined by using the following expression (4).

$$\text{Color difference } (\Delta E) = E - E0 \cdots (4)$$

Then, the stain resistance was evaluated from the acquired color difference according to the following criteria.

(Evaluation criteria)

◎: color difference of lower than 2%
○: color difference of 2% or higher and lower than 5%
Δ : color difference of 5% or higher and lower than 20%
× : color difference of 20% or higher, or nonevaluable

[Synthesis Example 1]

380 g (4.3 mol) of ethylene carbonate, 210 g (2.3 mol) of 2-methyl-1,3-propanediol and 175 g (1.9 mol) of 1,4-butanediol were charged in a 1-L glass-made flask equipped with a rectifying column packed with a regular packing and a stirring device. 0.30 g of titanium tetraisopropoxide as a catalyst was further added, and stirred and heated at atmospheric pressure. Then, while the reaction temperature was gradually raised from 150°C to 180°C, the reaction was caused to progress for 15 hours while a mixture of produced ethylene glycol and ethylene carbonate was distilled away. Thereafter, the pressure was reduced to 14 kPa; and while the diols and ethylene carbonate were distilled away, the reaction was carried out at 180°C further for 3 hours to thereby obtain a polycarbonate diol. The analysis results of the obtained polycarbonate diol are shown in Table 1. This polycarbonate diol was abbreviated to PC-1.

[Synthesis Example 2]

A polycarbonate diol was obtained by carrying out the reaction of Synthesis Example 1 at 180°C further for 2

hours. The analysis results of the obtained polycarbonate diol are shown in Table 1. This polycarbonate diol was abbreviated to PC-2.

[Synthesis Example 3]

A polycarbonate diol was obtained by carrying out the reaction of Synthesis Example 2 at 180°C further for 2 hours. The analysis results of the obtained polycarbonate diol are shown in Table 1. This polycarbonate diol was abbreviated to PC-3.

[Synthesis Example 4]

A polycarbonate diol was obtained by carrying out the reaction of Synthesis Example 3 at 180°C further for 4 hours. The analysis results of the obtained polycarbonate diol are shown in Table 1. This polycarbonate diol was abbreviated to PC-4.

[Synthesis Example 5]

The following reaction was carried out by using the apparatus described in Synthesis Example 1. 350 g (3.9 mol) of ethylene carbonate, 30 g (0.3 mol) of 2-methyl-1,3-propanediol and 350 g (3.9 mol) of 1,4-butanediol were charged. 0.30 g of titanium tetraisopropoxide as a catalyst was further added, and stirred and heated at atmospheric pressure. Then, while the reaction temperature was gradually raised from 150°C to 180°C, the reaction was caused to progress for 18 hours while a mixture of produced ethylene glycol and ethylene carbonate was distilled away. Thereafter, the pressure was reduced to 14 kPa; and while the diols and ethylene carbonate were distilled away, the reaction was carried out at 180°C further for 10 hours to thereby obtain a polycarbonate diol. The analysis results of the obtained polycarbonate diol are shown in Table 1. This polycarbonate diol was abbreviated to PC-5.

[Synthesis Example 6]

A polycarbonate diol was obtained by causing the reaction to progress by using the apparatus of Synthesis Example 5 and under the condition indicated in Synthesis Example 5, except for charging 380 g (4.3 mol) of ethylene carbonate, 120 g (1.3 mol) of 2-methyl-1,3-propanediol and 270 g (3.0 mol) of 1,4-butanediol, and adding 0.31 g of titanium tetraisopropoxide as a catalyst. The analysis results of the obtained polycarbonate diol are shown in Table 1. This polycarbonate diol was abbreviated to PC-6.

[Synthesis Example 7]

A polycarbonate diol was obtained by causing the reaction to progress by using the apparatus of Synthesis Example 5 and under the condition indicated in Synthesis Example 5, except for charging 370 g (4.2 mol) of ethylene carbonate, 270 g (3.0 mol) of 2-methyl-1,3-propanediol and 105 g (1.2 mol) of 1,4-butanediol, and adding 0.30 g of titanium tetraisopropoxide as a catalyst. The analysis results of the obtained polycarbonate diol are shown in Table 1. This polycarbonate diol was abbreviated to PC-7.

[Synthesis Example 8]

A polycarbonate diol was obtained by causing the reaction to progress by using the apparatus of Synthesis Example 5 and under the condition indicated in Synthesis Example 5, except for charging 370 g (4.2 mol) of ethylene carbonate and 380 g (4.2 mol) of 2-methyl-1,3-propanediol, and adding 0.30 g of titanium tetraisopropoxide as a catalyst. The analysis results of the obtained polycarbonate diol are shown in Table 1. This polycarbonate diol was abbreviated to PC-8.

[Synthesis Example 9]

A polycarbonate diol was obtained by causing the reaction to progress by using the apparatus of Synthesis Example 5 and under the condition indicated in Synthesis Example 5, except for charging 340 g (3.8 mol) of ethylene carbonate, 300 g (3.3 mol) of 2-methyl-1,3-propanediol and 60 g (0.5 mol) of 1,6-hexanediol, and adding 0.28 g of titanium tetraisopropoxide as a catalyst. The analysis results of the obtained polycarbonate diol are shown in Table 1. This polycarbonate diol was abbreviated to PC-9.

[Synthesis Example 10]

A polycarbonate diol was obtained by causing the reaction to progress by using the apparatus of Synthesis Example 5 and under the condition indicated in Synthesis Example 5, except for charging 350 g (4.0 mol) of ethylene carbonate, 260 g (2.9 mol) of 2-methyl-1,3-propanediol and 105 g (1.0 mol) of 3-methyl-1,5-pentanediol, and adding 0.28 g of titanium tetraisopropoxide as a catalyst. The analysis results of the obtained polycarbonate diol are shown in Table 1. This polycarbonate diol was abbreviated to PC-10.

[Synthesis Example 11]

A polycarbonate diol was obtained by causing the reaction to progress by using the apparatus of Synthesis Example 5 and under the condition indicated in Synthesis Example 5, except for charging 290 g (3.3 mol) of ethylene carbonate, 260 g (2.9 mol) of 2-methyl-1,3-propanediol and 70 g (0.4 mol) of 1,9-nonanediol, and adding 0.25 g of titanium tetraisopropoxide as a catalyst. The analysis results of the obtained polycarbonate diol are shown in Table 1. This polycarbonate diol was abbreviated to PC-11.

[Synthesis Example 12]

A polycarbonate diol was obtained by causing the reaction to progress by using the apparatus of Synthesis Example 5 and under the condition indicated in Synthesis Example 5, except for charging 350 g (3.9 mol) of ethylene carbonate, 230 g (2.6 mol) of 2-methyl-1,3-propanediol and 170 g (1.4 mol) of 1,6-hexanediol, and adding 0.30 g of titanium tetraisopropoxide as a catalyst. The analysis results of the obtained polycarbonate diol are shown in Table 1. This polycarbonate diol was abbreviated to PC-12.

[Synthesis Example 13]

A polycarbonate diol was obtained by causing the reaction to progress by using the apparatus of Synthesis Example 5 and under the condition indicated in Synthesis Example 5, except for charging 370 g (4.2 mol) of ethylene carbonate, 350 g (3.9 mol) of 1,4-butanediol and 40 g (0.4 mol) of 1,5-pentanediol, and adding 0.30 g of titanium tetraisopropoxide as a catalyst. The analysis results of the obtained polycarbonate diol are shown in Table 1. This polycarbonate diol was abbreviated to PC-13.

[Synthesis Example 14]

A polycarbonate diol was obtained by causing the reaction to progress by using the apparatus of Synthesis Example 5 and under the condition indicated in Synthesis Example 5, except for charging 340 g (3.9 mol) of ethylene carbonate, 200 g (1.9 mol) of 1,5-pentanediol and 235 g (2.0 mol) of 1,6-hexanediol, and adding 0.31 g of titanium tetraisopropoxide as a catalyst. The analysis results of the obtained polycarbonate diol are shown in Table 1. This polycarbonate diol was abbreviated to PC-14.

[Table 1]

| Synthesis Example | Repeating Unit mol% | | Molecular Weight | Average Number of Carbon Atoms | Property | Polycarbonate Diol |
|---|---|---|---|---|---|---|
| | A | B | | | | |
| 1 | 51 | 49 | 503 | 3.5 | liquid | PC-1 |
| 2 | 51 | 49 | 792 | 3.5 | liquid | PC-2 |
| 3 | 51 | 49 | 987 | 3.5 | liquid | PC-3 |
| 4 | 51 | 49 | 1987 | 3.5 | liquid | PC-4 |
| 5 | 7 | 93 | 1002 | 4.0 | solid | PC-5 |
| 6 | 28 | 72 | 1008 | 3.7 | liquid | PC-6 |
| 7 | 69 | 31 | 997 | 3.3 | liquid | PC-7 |
| 8 | 100 | 0 | 994 | 3.0 | liquid | PC-8 |
| 9 | 85 | 15 | 1012 | 3.5 | liquid | PC-9 |

(continued)

| Synthesis Example | Repeating Unit mol% | | Molecular Weight | Average Number of Carbon Atoms | Property | Polycarbonate Diol |
|---|---|---|---|---|---|---|
| | A | B | | | | |
| 10 | 71 | 29 | 997 | 3.6 | liquid | PC-10 |
| 11 | 85 | 15 | 986 | 3.9 | liquid | PC-11 |
| 12 | 61 | 39 | 1006 | 4.2 | liquid | PC-12 |
| 13 | 0 | 100 | 1008 | 4.1 | solid | PC-13 |
| 14 | 0 | 100 | 992 | 5.5 | liquid | PC-14 |

[Example 1]

2.6 g of the polycarbonate diol PC-1 and 10 g of an acryl polyol (manufactured by Allnex Netherlands B.V., "Setalux 1152"(trade name), a hydroxyl value of the resin: 138.6 mgKOH/g, solid content: 61 mass%) as base materials, 6.9 g of "TPA-100"(trade name) as a hardener, and 23.5 g of butyl acetate as a solvent were weighed and mixed so that the mass ratio (component $\alpha$/component $\beta$) of the resin component of the polycarbonate diol PC-1 obtained in Synthesis Example 1 to the resin component of the "Setalux 1152"(trade name) became 30/70 and the molar ratio of NCO/OH became 1.02. Then, the obtained mixture was stirred by using a stirrer at 600 rpm for 20 min to thereby obtain a coating composition-1. The obtained coating composition-1 was evaluated according to the above methods. The results are shown in the following Table 2.

[Example 2]

2.6 g of the polycarbonate diol PC-2 and 10 g of the "Setalux 1152"(trade name) as base materials, 6.2 g of "TPA-100"(trade name) as a hardener, and 22.3 g of butyl acetate as a solvent were weighed and mixed. Then, the obtained mixture was stirred by using a stirrer at 600 rpm for 20 min to thereby obtain a coating composition-2. The obtained coating composition-2 was evaluated according to the above methods. The results are shown in the following Table 2.

[Example 3]

2.6 g of the polycarbonate diol PC-3 and 10 g of the "Setalux 1152"(trade name) as base materials, 5.9 g of "TPA-100"(trade name) as a hardener, and 22.0 g of butyl acetate as a solvent were weighed and mixed. Then, the obtained mixture was stirred by using a stirrer at 600 rpm for 20 min to thereby obtain a coating composition-3. The obtained coating composition-3 was evaluated according to the above methods. The results are shown in the following Table 2.

[Example 4]

2.6 g of the polycarbonate diol PC-3 and 10 g of the "Setalux 1152"(trade name) as base materials, 5.4 g of "TPA-100"(trade name) as a hardener, and 21.2 g of butyl acetate as a solvent were weighed and mixed. Then, the obtained mixture was stirred by using a stirrer at 600 rpm for 20 min to thereby obtain a coating composition-4. The obtained coating composition-4 was evaluated according to the above methods. The results are shown in the following Table 2.

[Examples 5 to 11]

Coating compositions-5 to 11 were obtained by the method of Example 4, except for using polycarbonate diols PC-5 to 11 as base materials, respectively. The obtained coating compositions-5 to 11 were evaluated according to the above methods. The results are shown in the following Table 2.

[Comparative Examples 1 to 3]

Coating compositions-12 to 14 were obtained by the method of Example 4, except for using polycarbonate

diols PC-12 to 14 as base materials, respectively. The obtained coating compositions-12 to 14 were evaluated according to the above methods. The results are shown in the following Table 2.

[Example 12] (for reference)

10 g of the polycarbonate diol PC-3 and 10 g of the "Setalux 1152"(trade name) (mass ratio of component α/component β: 62/38) as base materials, 8.9 g of "TPA-100"(trade name) as a hardener, and 37.5 g of butyl acetate as a solvent were weighed and mixed. Then, the obtained mixture was stirred by using a stirrer at 600 rpm for 20 min to thereby obtain a coating composition-15. The obtained coating composition-15 was evaluated according to the above methods. The results are shown in the following Table 2.

[Example 13]

5.7 g of the polycarbonate diol PC-3 and 10 g of the "Setalux 1152"(trade name) (mass ratio of component α/component β: 48/52) as base materials, 7.2 g of "TPA-100"(trade name) as a hardener, and 28.5 g of butyl acetate as a solvent were weighed and mixed. Then, the obtained mixture was stirred by using a stirrer at 600 rpm for 20 min to thereby obtain a coating composition-16. The obtained coating composition-16 was evaluated according to the above methods. The results are shown in the following Table 2.

[Example 14]

4.0 g of the polycarbonate diol PC-3 and 10 g of the "Setalux 1152"(trade name) (mass ratio of component α/component β: 40/60) as base materials, 6.5 g of "TPA-100"(trade name) as a hardener, and 25.0 g of butyl acetate as a solvent were weighed and mixed. Then, the obtained mixture was stirred by using a stirrer at 600 rpm for 20 min to thereby obtain a coating composition-17. The obtained coating composition-17 was evaluated according to the above methods. The results are shown in the following Table 2.

[Example 15]

0.8 g of the polycarbonate diol PC-3 and 10 g of the "Setalux 1152"(trade name) (mass ratio of component α/component β: 12/88) as base materials, 5.2 g of "TPA-100"(trade name) as a hardener, and 18.0 g of butyl acetate as a solvent were weighed and mixed. Then, the obtained mixture was stirred by using a stirrer at 600 rpm for 20 min to thereby obtain a coating composition-18. The obtained coating composition-18 was evaluated according to the above methods. The results are shown in the following Table 2.

[Example 16] (for reference)

0.2 g of the polycarbonate diol PC-3 and 10 g of the "Setalux 1152"(trade name) (mass ratio of component α/component β: 3/97) as base materials, 5.0 g of "TPA-100"(trade name) as a hardener, and 17.0 g of butyl acetate as a solvent were weighed and mixed. Then, the obtained mixture was stirred by using a stirrer at 600 rpm for 20 min to thereby obtain a coating composition-19. The obtained coating composition-19 was evaluated according to the above methods. The results are shown in the following Table 2.

[Table 2]

| | Polycarbonate Diol used | Flaw Restorability | | Stain Resistance | |
|---|---|---|---|---|---|
| | | after 1 hour | after 1 day | blue | black |
| Example 1 | PC-1 | ○ | ○ | ◎ | ○ |
| Example 2 | PC-2 | ○ | ◎ | ◎ | ○ |
| Example 3 | PC-3 | ○ | ◎ | ◎ | ○ |
| Example 4 | PC-4 | ○ | ○ | ○ | Δ |
| Example 5 | PC-5 | Δ | Δ | Δ | Δ |
| Example 6 | PC-6 | ○ | ◎ | ○ | Δ |
| Example 7 | PC-7 | ○ | ◎ | ◎ | ○ |

(continued)

| | Polycarbonate Diol used | Flaw Restorability | | Stain Resistance | |
|---|---|---|---|---|---|
| | | after 1 hour | after 1 day | blue | black |
| Example 8 | PC-8 | ○ | ○ | ◎ | ○ |
| Example 9 | PC-9 | Δ | ◎ | ◎ | O |
| Example 10 | PC-10 | Δ | ◎ | O | O |
| Example 11 | PC-11 | Δ | O | ○ | Δ |
| Comparative Example 1 | PC-12 | Δ | ◎ | Δ | × |
| Comparative Example 2 | PC-13 | × | Δ | Δ | × |
| Comparative Example 3 | PC-14 | Δ | ◎ | Δ | × |
| Example 12* | PC-3 | ○ | ◎ | Δ | × |
| Example 13 | PC-3 | ○ | ◎ | ○ | ○ |
| Example 14 | PC-3 | ○ | ◎ | ◎ | ○ |
| Example 15 | PC-3 | Δ | ◎ | ◎ | O |
| Example 16* | PC-3 | × | Δ | ◎ | ◎ |
| * for reference, not belonging to the invention | | | | | |

Industrial Applicability

The coating compositions according to the present embodiment can suitably be utilized in the broad fields of coating on cars, buses, railway vehicles, construction machines, agricultural machines, floors, walls and roofs of buildings, metal products, mortar and concrete products, woodwork products, plastic products, ceramic building materials such as calcium silicate boards and gypsum boards, and the like.

## Claims

**1.** A coating composition comprising the following component $\alpha$, the following component $\beta$ and the following component $\gamma$;
component $\alpha$: a polycarbonate diol comprising repeating units represented by the following formulae (A) and (B) and a terminal hydroxyl group, wherein a molar ratio (the repeating unit represented by the formula (A)/the repeating unit represented by the formula (B)) between the repeating units represented by the formulae (A) and (B) is 1/99 to 100/0, and an average number of carbon atoms of the repeating units is 3.0 to 4.0;

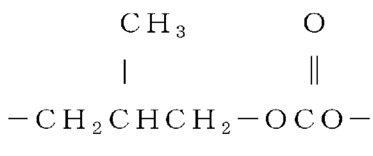
(A)

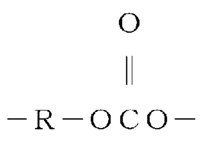
(B)

wherein R represents a divalent aliphatic hydrocarbon having 4 to 15 carbon atoms, excluding an alkylene group derived from 2-methyl-1,3-propanediol;
component $\beta$: a polyol other than the component $\alpha$; and
component $\gamma$: an organic polyisocyanate,

wherein 50 mass% or more and 95 mass% or less of the component β is comprised based on a total mass of the component α and the component β.

2. The coating composition according to claim 1, wherein the repeating unit represented by the formula (B) is a repeating unit represented by the following formula (C) :

$$-(CH_2)_n-O\overset{\overset{\displaystyle O}{\|}}{C}O- \qquad (C)$$

wherein n represents an integer of 4 to 12.

## Patentansprüche

1. Beschichtungszusammensetzung, umfassend die folgende Komponente α, die folgende Komponente β und die folgende Komponente γ;
Komponente α- ein Polycarbonatdiol, welches Wiederholungseinheiten der folgenden Formeln (A) und (B) sowie eine endständige Hydroxylgruppe aufweist, wobei ein Molverhältnis (Wiederholungseinheit der Formel (A) / Wiederholungseinheit der Formel (B)) zwischen den Wiederholungseinheiten der Formeln (A) und (B) 1/99 bis 100/0 ist, und eine durchschnittliche Anzahl von Kohlenstoffatomen der Wiederholungseinheiten 3,0 bis 4,0 ist;

$$-CH_2\overset{\overset{\displaystyle CH_3}{|}}{C}HCH_2-O\overset{\overset{\displaystyle O}{\|}}{C}O- \qquad (A)$$

$$-R-O\overset{\overset{\displaystyle O}{\|}}{C}O- \qquad (B)$$

wobei R einen zweiwertigen aliphatischen Kohlenwasserstoff mit 4 bis 15 Kohlenstoffatomen darstellt, ausgenommen eine von 2-Methyl-1,3-propandiol abgeleitete Alkylengruppe;
Komponente β: ein anderes Polyol als die Komponente α; und
Komponente γ: ein organisches Polyisocyanat,
wobei 50 Massen-% oder mehr und 95 Massen-% oder weniger der Komponente β enthalten ist, bezogen auf die Gesamtmasse der Komponente α und der Komponente β.

2. Beschichtungszusammensetzung nach Anspruch 1, wobei die Wiederholungseinheit der Formel (B) eine durch die folgende Formel (C) dargestellte Wiederholungseinheit ist:

$$-(CH_2)_n-O\overset{\overset{\displaystyle O}{\|}}{C}O- \qquad (C)$$

wobei n eine ganze Zahl von 4 bis 12 darstellt.

## Revendications

1. Composition de revêtement comprenant le composant α suivant, le composant β suivant et le composant γ suivant ;

composant α : un polycarbonate diol comprenant des motifs répétitifs représentés par les formules (A) et (B) suivantes et un groupe hydroxyle terminal, dans laquelle un rapport molaire (le motif répétitif représenté par la formule (A)/le motif répétitif représenté par la formule (B)) entre les motifs répétitifs représentés par les formules (A) et (B) est de 1/99 à 100/0, et un nombre moyen d'atomes de carbone des motifs répétitifs est de 3,0 à 4,0 ;

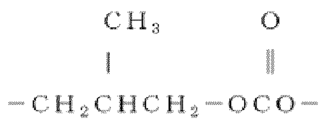

(A)

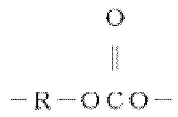

(B)

dans laquelle R représente un hydrocarbure aliphatique divalent comportant de 4 à 15 atomes de carbone, excluant un groupe alkylène dérivé de 2-méthyl-1,3-propanediol ;
composant β : un polyol autre que le composant α ; et
composant γ : un polyisocyanate organique,
dans laquelle le composant β est compris entre 50 % en masse ou plus et 95 % en masse ou moins sur la base d'une masse totale du composant α et du composant β.

2. Composition de revêtement selon la revendication 1, dans laquelle le motif répétitif représenté par la formule (B) est un motif répétitif représenté par la formule (C) suivante :

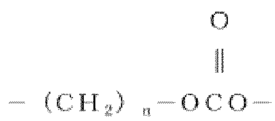

(C)

dans laquelle n représente un nombre entier de 4 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012072350 A
- JP 2012107101 A
- JP 2007016231 A
- US 20160369034 A1
- WO 2017138337 A1
- JP 57034107 A
- JP 61275311 A

### Non-patent literature cited in the description


- **SCHNELL.** *Polymer Reviews,* 1994, vol. 9, 9-20